# EUROPÄISCHE PATENTSCHRIFT

(11) **EP 1 882 628 B1**
(45) Veröffentlichungstag und Bekanntmachung des Hinweises auf die Patenterteilung: **23.10.2013**
(21) Anmeldenummer: 07111441.7
(22) Anmeldetag: 29.06.2007
(51) Int. Cl.: B64C 27/00, B64C 27/605

(54) **Verfahren und Vorrichtung zur Zustandsüberwachung des Wälzlagers einer Taumelscheibe eines Drehflüglers**
Method and device for status monitoring of the roller bearing of a swash plate of a rotorcraft
Procédé et dispositif destinés à la surveillance de l'état du pallier à roulement d'un disque oscillant d'une voilure tournante

(30) Priorität: 28.07.2006 DE 102006034965
(43) Veröffentlichungstag der Anmeldung: 30.01.2008
(73) Patentinhaber: ZF Friedrichshafen AG, 88038 Friedrichshafen (DE)
(72) Erfinder: Keßler, Christoph, 38104 Braunschweig (DE); Fürst, Daniel, 34119 Kassel (DE)

(56) Entgegenhaltungen:
- EP-A1- 1 312 815
- EP-A2- 1 150 093
- US-A- 5 381 692
- US-A- 5 952 587

## Beschreibung

Die Erfindung betrifft ein Verfahren und eine Vorrichtung zur Zustandsüberwachung des Wälzlagers einer Taumelscheibe eines Drehflüglers gemäss dem Oberbegriff des Anspruchs 1 beziehungsweise des Anspruchs 9.

Heutige Drehflügler weisen zur mechanischen Übertragung der Steuerbefehle des Piloten in den sich drehenden Hauptrotor üblicherweise eine Taumelscheibe auf. Die Taumelscheibe besteht aus einem stationären und einem drehbaren Teil, welche durch ein Wälzlager voneinander getrennt sind. Die Taumelscheibe kann mit ihrem stationären Teil mit beispielsweise drei Aktuatoren oder Boostern verbunden sein, welche die Steuersignale des Piloten kraftverstärkt zu den Rotorblättern weiterleiten. Die drei Booster können die Taumelscheibe parallel zur Rotorachse verschieben (Kollektivsteuerung) beziehungsweise in zwei zueinander unabhängige Richtungen kippen (zyklische Steuerung). Diese drei Bewegungsmöglichkeiten werden über das Wälzlager auf das drehbare Teil der Taumelscheibe übertragen, welches sich synchron mit dem Rotor dreht. Die Bewegung der Taumelscheibe wird mittels Steuerstangen auf das Steuerhorn der Rotorblätter übertragen, wodurch der Blatteinstellwinkel der Rotorblätter veränderbar ist. Die Änderung besteht dabei aus einem über den Rotorumlauf, beschrieben durch einen Umlaufwinkel, unabhängigen Anteil und einem im Rotorumlauf harmonischen Anteil.

Bei einigen Drehflüglervarianten, insbesondere bei Kipprotorflugzeugen, findet man auch, dass die Taumelscheibe lediglich zwei Freiheitsgrade, nämlich einen Freiheitsgrad betreffend die kollektive Verschiebung längs eines Rotorbeziehungsweise Propellermastes und einen Kippfreiheitsgrad, aufweist.

Demgegenüber kann auch nur ein Kippfreiheitsgrad vorgesehen sein, während die Kollektivsteuerung durch einen parallelen Übertragungspfad unabhängig von der Taumelscheibe in den Rotor übertragen wird. Dann reichen zur Ansteuerung der Taumelscheibe zwei beziehungsweise ein Aktuator oder Booster aus. Die Booster können auch entfallen, sofern keine Kraftverstärkung erforderlich ist.

Damit sich der stationäre Teil der Taumelscheibe infolge von zur Taumelscheibe tangential angreifenden Kräften nicht gegenüber einem hubschrauberzellenfesten Bezugssystem verdreht und demgemäss das unter dem stationären Teil der Taumelscheibe befindliche feste Steuergestänge nicht auf Querkräfte belastet wird beziehungsweise nachteilige Winkelverlagerungen erfährt, ist die stehende Taumelscheibe mittels zumindest einer aus Schwenkgliedern zusammengesetzten Vorrichtung in Form einer so genannten "Schere" mit einer Komponente der Luftfahrzeugzelle des Drehflüglers, beispielsweise einem Getriebegehäuse oder ähnlichem verbunden.

Die Anbringung dieser Schere beziehungsweise deren Form ist derart gewählt, dass sie die oben erwähnten Freiheitsgrade der Taumelscheibe, wie Verschiebung und Verkippung, zulässt, jedoch die Drehbewegung um die Rotorachse unterbindet und demgemäss die tangential zur Taumelscheibe angreifenden Kräfte aufnimmt.

Eine weitere so genannte Schere verbindet den drehbaren Teil der Taumelscheibe mit dem Rotormast bzw. Rotorkopf und erzwingt somit eine synchrone Drehung des drehbaren Teils der Taumelscheibe mit dem Rotor. Auch hierdurch soll eine Verkippung der Steuerstangen beziehungsweise eine Querkraftbelastung derselben verhindert werden.

Zur Sicherstellung der Funktion der Taumelscheibe ist die ordnungsgemässe Funktion der Wälzlagerung, über welche das stationäre und das drehbare Teil der Taumelscheibe wie vorstehend erläutert untereinander wirkverbunden sind, von besonderer Bedeutung. Führt eine Beschädigung des Wälzlagers zu einem erschwerten Lagerlauf beziehungsweise zu einer Blockade desselben, so kann dies zum Absturz des Drehflüglers, wie beispielsweise eines Hubschraubers, und damit zum Verlust von Menschenleben und Material führen.

Zur direkten Überwachung der Funktionstüchtigkeit des Wälzlagers stehen bei konventionellen Taumelscheibenwälzlagerungen kaum Möglichkeiten zur Verfügung, zumal diese Wälzlager in aller Regel fettgeschmiert sind und somit eine Diagnose von beispielsweise abgelösten Metallpartikeln mittels Span-Detektoren nicht realisierbar ist. Zudem können auch Lagerschäden infolge von Korrosion auftreten, welche ebenfalls nicht durch derartige Sensoren festgestellt werden können.

Zwar besteht die Möglichkeit, in regelmässigen Abständen die Steuerstangen, die den drehbaren Teil der Taumelscheibe mit den Steuerhörnern der Rotorblätter verbinden sowie die drehenden Scheren auszuhängen und den nun frei drehbaren Teil der Taumelscheibe von Hand zu drehen und dahingehend zu prüfen, ob eine Schwergängigkeit oder ein Lagerschaden zu verzeichnen ist. Dieses Verfahren wird jedoch als ungenau und äusserst subjektiv eingeschätzt, welches somit nicht den hohen Sicherheitsanforderungen an ein Fluggerät gerecht wird.

Um diesem Umstand zu begegnen, werden Taumelscheiben in regelmässigen Abständen gewartet, indem dieselben im ausgebauten Zustand einer eingehenden Überprüfung unterzogen werden. Diese Massnahme ist kostenund zeitintensiv. In der Praxis hat sich ferner gezeigt, dass der Befund einer Prüfung der Lagerung im eingebauten Zustand (wie vorstehend beschrieben) am ausgebauten Lager nicht immer bestätigt werden kann. Dies bedeutet, dass teilweise ein Ausbau und Tausch der Lagerung erfolgte, welcher technisch nicht notwendig gewesen wäre.

Des Weiteren sind vereinzelt Lösungsansätze bekannt geworden, bei denen laufend der Zustand der Wälzlagerung einer Taumelscheibe mittels einer als "Bearing Monitoring Unit (BMU)" bezeichneten Lager-Überwachungsvorrichtung sensiert wird. Dazu weist das Wälzlager der Taumelscheibe mindestens einen Beschleunigungssensor und einen Temperatursensor auf. Wälzlagerungen mit derartigen Sensoren werden von den Lagerherstellern bereits angeboten und können auch Drehzahlsensoren mit umfassen. Mittels der Beschleunigungssensoren ist man in die Lage versetzt, beispielsweise auf Schäden in den Laufflächen der Lagerringe oder an den Wälzkörpern zu schliessen, während ein Temperaturanstieg auf erhöhte Schwergängigkeit der Lagerung beziehungsweise des Wälzlagers allgemein hinweist.

Üblicherweise sind der BMU beziehungsweise deren Sensoren elektronische Speicher- und Auswerteeinheiten zugeordnet. Während die Auswertung des Beschleunigungssignals online und/oder offline erfolgen kann, ist die Temperaturanzeige dem Piloten unmittelbar mitzuteilen, da diese den Abbruch des Fluges im Falle überhöhter Temperaturwerte zur Folge haben kann, da dann ein schwerwiegender Lagerschaden unmittelbar bevorstehen kann beziehungsweise bereits vorliegt. Eine Überwachungsvorrichtung für Wälzlager eines Hubschraubers ist beispielsweise aus der DE 693 29 623 T2 (US 5 381 962 A1) bekannt.

Aus der DE 602 13 738 T2 ist eine Überwachungsvorrichtung für ein Kollektivkopflager eines Hubschraubers oder Kipp-Rotor-Flugzeuges bekannt, bei welcher ein Beschleunigungssensor an der drehbaren Komponente einer Taumelscheibe befestigt ist. Mit Hilfe dieses Sensors sind Frequenzen überwachbar, die von dem Kollektivkopflager ausgesendet werden.

Außerdem ist aus der DE 29 47 937 A1 ein Verfahren und eine Vorrichtung zur Bestimmung von Wälzlagerschäden bekannt, gemäß denen ein Lagerschaden mit Hilfe eines Dehnungsmessstreifens an einem Gehäuse des Wälzlagers gemessen wird, welches kraftschlüssig mit dem Außenring des Wälzlagers verbunden ist.

Vor diesem Hintergrund liegt der Erfindung die Aufgabe zugrunde, ein weiter verbessertes Verfahren sowie eine zugehörige Vorrichtung zur Zustandsüberwachung der Wälzlagerung einer Taumelscheibe eines Drehflüglers anzugeben, welche bei vergleichsweise geringem Aufwand einfach und zuverlässig Rückschlüsse auf den Verschleiss beziehungsweise einen etwaigen Schädigungsgrad eines solchen Wälzlagers zulässt.

Die Lösung dieser Aufgabe ergibt sich für das Verfahren und die Vorrichtung aus den Merkmalen der unabhängigen Ansprüche 1 und 9, während vorteilhafte Ausgestaltungen und Weiterbildungen der Erfindung den jeweils nachgeordneten Unteransprüchen entnehmbar sind.

Der Erfindung liegt die Erkenntnis zugrunde, dass eine Erfassung und Auswertung der unmittelbaren mechanischen Belastung zumindest einer der genannten Scheren während des Betriebes des Drehflüglers im Vergleich zu herkömmlichen Massnahmen zur Zustandsüberwachung der in Rede stehenden Wälzlagerung der Taumelscheibe zuverlässigere Rückschlüsse auf den Verschleiss beziehungsweise den Schädigungsgrad des Wälzlagers zulässt, und obendrein noch einfach sowie kostengünstig zu realisieren ist.

Demnach wird ein Verfahren zur Zustandsüberwachung des Wälzlagers der Taumelscheibe eines Drehflüglers vorgeschlagen, der zumindest einen Rotor mit zwei oder mehr Rotorblättern aufweist, die an einem Rotorkopf angelenkt und um ihre Längsachse schwenkbar gelagert sind, wobei die Rotorblätter über eine einen Rotormast umschliessende Taumelscheibe ansteuerbar sind, und bei dem die Taumelscheibe gebildet ist aus einem stationären Teil, das mittels zumindest einer ersten Schere drehfest mit der Luftfahrzeugzelle des Drehflüglers verbunden ist, und einem drehbaren Teil, das über das Wälzlager gegenüber dem stationären Teil drehbar gelagert und drehfest mittels zumindest einer zweiten Schere mit dem Rotorkopf verbunden ist, welches folgende Verfahrensschritte umfasst:
a) Erfassung der an zumindest einer Schere angreifenden Querkräfte, Biegemomente und/oder Dehnungen bzw. Wege mittels zumindest eines Sensors unmittelbar an der Schere ,
b) Generierung von auswertbaren Signalen vermittels des zumindest einen Sensors,
c) Übermittlung der generierten Signale an eine elektronische Speicher- und Auswerteeinheit,
d) Auswertung der gespeicherten Messwerte unter Hinzuziehung von Referenzwerten, und
e) Schliessen auf den aktuellen Zustand des Wälzlagers der Taumelscheibe.

Im Hinblick auf den Verfahrensschritt a) wird des Weiteren die Verwendung eines Sensors in Form eines Dehnungsmessstreifens, eines auf Dehnungsmessstreifen aufbauenden Sensors oder eines sonstigen an sich bekannter Sensors vorgeschlagen, der geeignet ist, Querkräfte, Biegemomente und/oder Dehnungen bzw. Wege zu erfassen. Ein solcher Sensor kann beispielsweise ein an sich bekannter Piezo-Sensor sein.

Daneben wird im Hinblick auf den Verfahrensschritt a) vorgeschlagen, dass die angreifenden Querkräfte, Biegemomente und/oder Dehnungen bzw. Wege über mehrere Stützstellen bzw. Messstellen während eines Umlaufs des Rotors unter zusätzlicher Verwendung eines Winkelgebers winkelgetriggert (winkeläquidistant) oder unter zusätzlicher Verwendung eines Drehzahlsensors zeitgetriggert (zeitäquidistant) erfasst werden, so dass jedem Messwert ein Drehwinkel des Rotors oder ein Zeitwert zugeordnet ist.

Insoweit kann als Drehzahlsensor ein Rotor-Drehzahlsensor, wie ein in dem Wälzlager der Taumelscheibe integrierter oder ein in der Rotormast-Lagerung integrierter Drehzahlsensor, oder ein jeglicher anderer geeigneter Drehzahlsensor, wie ein am Hauptantrieb oder an einer Getriebewelle messender Drehzahlsensor, verwendet werden.

Im Hinblick auf den Verfahrensschritt c) können die generierten Signale elektrisch oder berührungslos mittels Funk, Infrarot oder Ultraschall der elektronischen Speicher- und Auswerteeinheit zugeführt werden.

In Fortbildung des Verfahrens ist vorgesehen, dass zur weiteren Verbesserung des Überwachungsergebnisses mittels einer allgemein als Bearing Monitoring Unit - BMU - bezeichneten Lager-Überwachungsvorrichtung Zustands- und/oder Betriebsbedingungen des Wälzlagers der Taumelscheibe und/oder benachbarter Bauteile und/oder Aggregate erfasst sowie entsprechende Signale der elektronischen Speicher- und Auswerteeinheit zur gemeinsamen Verarbeitung mit den Signalen aus den erfassten Querkräften, Biegemomenten und/oder Dehnungen bzw. Wegen der zumindest einen Schere zugeführt werden.

Im Wesentlichen ist vorgesehen, dass von der Lager-Überwachungsvorrichtung als Zustands- und/oder Betriebsbedingungen des Wälzlagers der Taumelscheibe und/oder benachbarter Bauteile und/oder Aggregate Beschleunigungswerte und/oder Drehzahlwerte und/oder Temperaturwerte sensorisch erfasst werden.

Zweckmässigerweise werden die erfassten Messwerte eines Temperatursensors mit Umgebungstemperatur-Messwerten abgeglichen, um eine Verfälschung des Messergebnisses zu vermeiden.

Die Vorrichtung zur Zustandsüberwachung des Wälzlagers der Taumelscheibe eines Drehflüglers, der zumindest einen Rotor mit zwei oder mehr Rotorblättern aufweist, die an einem Rotorkopf angelenkt und um ihre Längsachse schwenkbar gelagert sind, wobei die Rotorblätter über eine einen Rotormast umschliessende Taumelscheibe ansteuerbar sind und die Taumelscheibe gebildet ist aus einem stationären Teil, das mittels zumindest einer ersten Schere drehfest mit der Luftfahrzeugzelle des Drehflüglers verbunden ist, und einem drehbaren Teil, welches über das Wälzlager gegenüber dem stationären Teil drehbar gelagert und drehfest mittels zumindest einer zweiten Schere mit dem Rotorkopf verbunden ist, zeichnet sich dadurch aus, dass zumindest einer Schere zumindest ein Sensor zur Erfassung der angreifenden Querkräfte, Biegemomente und/oder Dehnungen bzw. Wege zugeordnet ist, und dieser zumindest eine Sensor elektrisch oder berührungslos mittels Funk, Infrarot oder Ultraschall mit einer elektronischen Speicher- und Auswerteeinheit verbunden ist.

Der zumindest eine Sensor kann durch einen Dehnungsmessstreifen, einen auf Dehnungsmessstreifen aufbauenden Sensor oder einen sonstigen an sich bekannten Sensor gebildet sein, der geeignet ist, Querkräfte, Biegemomente und/oder Dehnungen bzw. Wege zu erfassen. Insoweit wird auf die vorigen Ausführungen verwiesen.

Ferner kann der elektronischen Speicher- und Auswerteeinheit eine allgemein als Bearing Monitoring Unit - BMU - bezeichnete Lagerüberwachungsvorrichtung zugeordnet sein, die Zustands- und/oder Betriebsbedingungen des Wälzlagers der Taumelscheibe und/oder benachbarter Bauteile und/oder Aggregate erfasst sowie entsprechende Signale zur gemeinsamen Verarbeitung mit den Signalen aus den erfassten Querkräften, Biegemomenten und/oder Dehnungen bzw. Wegen der zumindest einen Schere zur Verfügung stellt.

Die Zustands- und/oder Betriebsbedingungen des Wälzlagers der Taumelscheibe und/oder benachbarter Bauteile und/oder Aggregate sind vorzugsweise durch sensorisch erfasste Beschleunigungswerte und/oder Drehzahlwerte und/oder Temperaturwerte definiert.

Zur Verdeutlichung der Erfindung ist der Beschreibung eine Zeichnung mit zwei Ausführungsbeispielen von Drehflüglerrotoren beigefügt. Darin zeigt
Fig. 1: eine vereinfachte Darstellung eines Drehflüglerrotors, mit einer Taumelscheibe und einem dieser zugeordneten Wälzlager, und
Fig. 2: einen dreiblättrigen Rotor mit einem erfindungsgemässen Messsystem.

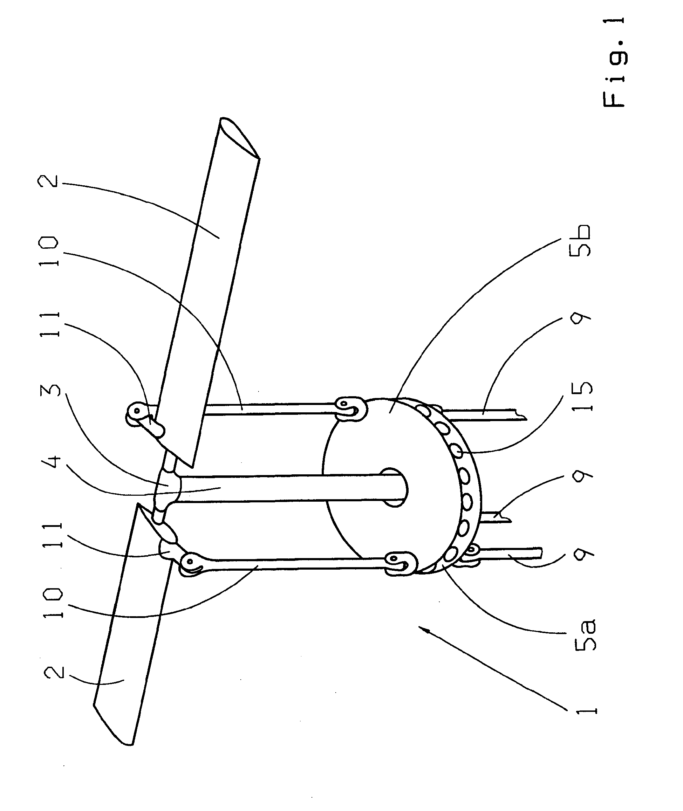

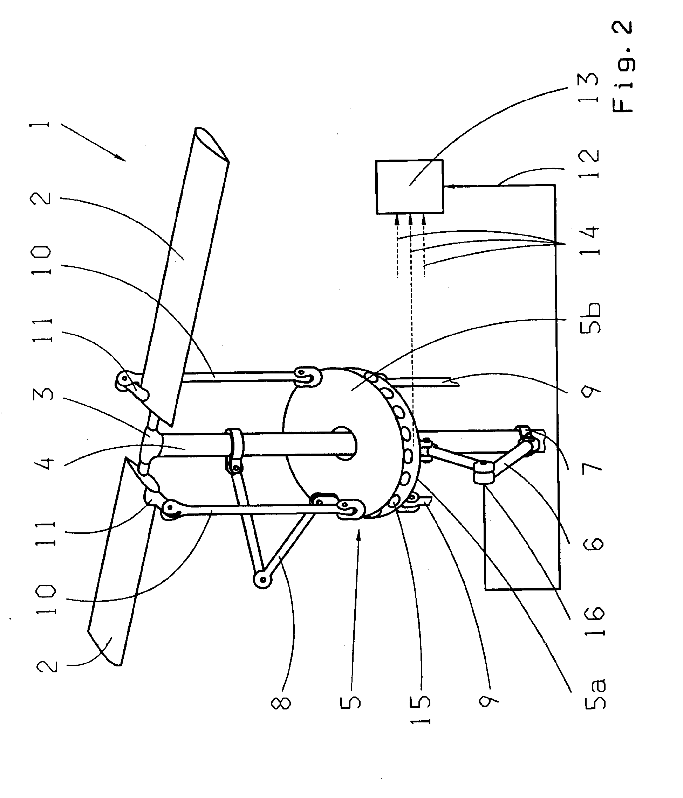

Die Figuren 1 und 2 zeigen demnach in dreidimensionaler Darstellung jeweils einen Hauptrotor 1 eines zweiblättrigen beziehungsweise dreiblättrigen Hubschraubers, wobei Fig. 1 die zweiteilige Taumelscheibe 5 sowie das der Taumelscheibe 5 zugeordnete Wälzlager 15 besonders gut zeigt, während in Fig. 2 das erfindungsgemässe Messsystem detailliert dargestellt ist.

Bei diesen Rotoren 1 sind die Rotorblätter 2 an einem Rotorkopf 3 angelenkt und um ihre Längsachse schwenkbar gelagert. Die Rotorblätter 2 sind zudem mittels der den Rotormast 4 unter Abstand umschliessenden Taumelscheibe 5 derart verbunden, dass eine Bewegung von nicht rotierenden Steuerteilen auf die rotierenden Teile übertragbar ist, welches eingangs ausführlich erläutert wurde.

Die Taumelscheibe 5 ist im Wesentlichen aus zwei konzentrisch zueinander angeordneten scheibenförmigen Teilen 5a und 5b gebildet, nämlich aus einem stationären Teil 5a, das mittels zumindest einer so genannten Schere 6 drehfest unmittelbar oder mittelbar mit der Luftfahrzeugzelle 7, vorliegend mit dem Getriebegehäuse des Drehflüglers verbunden ist, und einem drehbaren Teil 5b, weiches über das Wälzlager 15 gegenüber dem stationären Teil 5a drehbar gelagert und drehfest mittels zumindest einer zweiten Schere 8 mit dem Rotorkopf 3 verbunden ist. Das genannte Wälzlager 15 des Rotors 1 ermöglicht eine Verschiebung der Taumelscheibe 5; 5a, 5b in Bezug auf den Rotormast 4 nach oben und unten sowie ein Neigen der Taumelscheibe 5; 5a, 5b relativ zum Rotormast 4.

Die so genannten Scheren 6, 8 sind bekanntermassen jeweils durch zwei Schwenkglieder gebildet, die untereinander und mit den benachbarten Bauteilen mittels Scharnieren derart verbunden sind, dass lediglich eine Schwenkbewegung derselben parallel zur Rotorachse möglich ist.

Des Weiteren sind an sich bekannte feststehende und mitdrehende Steuerstangen 9 bzw. 10 vorgesehen, die gegebenenfalls über nicht näher gezeigte und die Steuerbefehle des Piloten unterstützende Aktuatoren die Steuerbefehle auf die Steuerhörner 11 der Rotorblätter 2 übertragen.

Zur Sicherstellung der ordnungsgemässen Funktion der Taumelscheibe 5; 5a, 5b und demgemäss zur Realisierung einer Zustandsüberwachung des Wälzlagers 15 der Taumelscheibe 5; 5a und 5b, welche bei vergleichsweise geringem Aufwand einfach und zuverlässig Rückschlüsse auf den Verschleiss beziehungsweise einen etwaigen Schädigungsgrad des Wälzlagers 15 zulässt, ist zunächst vorgesehen, dass an zumindest einer Schere 6 oder 8, vorliegend an der örtlich feststehenden Schere 6, die im Betrieb des Rotors 1 an der Schere 6 angreifenden Querkräfte, Biegemomente und/oder Dehnungen bzw. Wege erfasst werden.

Zu diesem Zweck wird zumindest ein an sich bekannter Sensor 16 zur Anwendung gebracht, der beispielsweise durch einen Dehnungsmessstreifen, einen auf Dehnungsmessstreifen aufbauender Sensor oder einen sonstigen an sich bekannten Sensor, beispielsweise einen Piezo-Sensor, gebildet sein kann, welcher geeignet ist, Querkräfte, Biegemomente und/oder Dehnungen bzw. Wege zu erfassen.

Der zumindest eine Sensor 16 an der Schere 6 oder 8 generiert auswertbare Signale 12, die elektrisch oder berührungslos einer elektronischen Speicher- und Auswerteeinheit 13 zugeführt werden und ein Mass für die tangential zur Taumelscheibe 5; 5a, 5b angreifenden Kräfte sowie Beschleunigungen darstellen.

Aufgrund der Tatsache, dass der Sensor 16 der feststehenden Schere 6 zugeordnet ist, also ausserhalb des drehenden Systems des Rotors 1 angeordnet ist, bietet es sich an, diese Signale 12 elektrisch und demgemäss mittels einem Kabel der elektronischen Speicher- und Auswerteeinheit 13 zuzuführen, die vorzugsweise an oder in der Luftfahrzeugzelle 7 des Drehflüglers angeordnet ist.

Demgegenüber kann es auch sinnvoll sein, einen oder mehrere der genannten Sensoren 16 an der sich im drehenden System befindlichen Schere 8 anzuordnen, so dass es dann zweckmässig ist, eine berührungslose Übertragung der generierten Signale 12 beispielsweise mittels Funk, Infrarot oder Ultraschall zur elektronischen Speicher- und Auswerteeinheit 13 vorzusehen.

Die elektronische Speicher- und Auswerteeinheit 13 ist durch dort abgespeicherte Programme in die Lage versetzt, die gespeicherten Messwerte, seien es Querkräfte, Biegemomente und/oder Dehnungen bzw. Wege unter Hinzuziehung von vorab eingespeicherten Referenzwerten sowohl online als auch offline auszuwerten. So können beispielsweise der Mittelwert des Sensorsignals 12 und Amplitudenwerte ermittelt werden, gegebenenfalls ergänzt durch die Ermittlung von Extremwerten (Maxima und Minima). Die Änderung des Mittelwertes im Flugbetrieb sowie gegenüber einem Referenzwert stellt bereits einen Anhaltswert für eine sich abzeichnende Lagerschädigung dar, noch ehe zusätzlich die Temperatur des Lagers respektive der Lagerung ansteigt.

Im Ergebnis kann somit sehr komfortabel und genau auf den aktuellen Zustand des Wälzlagers 15 der Taumelscheibe 5; 5a, 5b, beispielsweise auf einen bestimmten Schädigungsgrad derselben geschlossen werden, so dass notwendige Maßnahmen einleitbar sind. Eine prophylaktische Demontage der Taumelscheibe 5; 5a, 5b samt Wälzlager 15, wie sie herkömmlich allein zur Ermittlung eines etwaigen Schädigungsgrades vorgesehen ist, entfällt demnach.

So kann der aktuelle Zustand des Wälzlagers 15 beispielsweise laufend abgespeichert oder dem Piloten unmittelbar auf einem Display angezeigt und gegebenenfalls mit einem akustischen Signal kombiniert werden. Bevorzugt werden die Ergebnisse der Signalauswertung durch die Speicher- und Auswerteeinheit 13 dem Piloten aber erst dann angezeigt oder anders mitgeteilt, wenn bestimmte Grenzwerte der ermittelten Kräfte bzw. daraus abgeleitete positive oder negative Beschleunigungen bzw. Beschleunigungsgradienten erreicht oder überschritten werden.

In Untersuchungen hat sich herausgestellt, das die angreifenden Querkräfte, Biegemomente und/oder Dehnungen bzw. Wege bevorzugt über mehrere Stützstellen während eines Umlaufs des Rotors 1 unter zusätzlicher Verwendung eines nicht näher gezeigten, jedoch an sich bekannten Winkelgebers winkelgetriggert (winkeläquidistant) oder unter zusätzlicher Verwendung eines Drehzahlsensors zeitgetriggert (zeitäquidistant) zu erfassen sind.

Was den Drehzahlsensor anbelangt, so kann dieser durch einen nicht näher dargestellten Rotor-Drehzahlsensor, der seinerseits in das Wälzlager 15 der Taumelscheibe 5; 5a, 5b oder in eine Rotormast-Lagerung integriert sein kann, oder durch jeglichen anderen Drehzahlsensor, wie einen am nicht näher gezeigten Hauptantrieb oder an einer Abtriebswelle des Drehflüglergetriebes dessen Drehzahl erfassender Drehzahlsensor gebildet sein.

Die Erfassung der Drehzahl des Rotors 1 ist insbesondere dann sinnvoll, wenn dieselbe während des Betriebs gesteuert variiert, wie dies beispielsweise bei modernen Drehflüglern in Form von Kipprotorflugzeugen der Fall ist. Ist die Rotordrehzahl jedoch näherungsweise konstant, so kann die exakte Erfassung derselben auch entfallen und gegebenenfalls eine Solldrehzahl verwertet werden.

Um das Überwachungsergebnis bezüglich des Wälzlagers 15 der Taumelscheibe 5; 5a, 5b weiter zu verbessern bzw. um das Messsignal 12 zwecks einer Redundanz oder Absicherung abzugleichen, ist ferner eine nicht näher dargestellte, jedoch an sich bekannte und allgemein als Bearing Monitoring Unit - BMU - bezeichnete Lager-Überwachungsvorrichtung vorgesehen, die ihrerseits Zustands- und/oder Betriebsbedingungen des Wälzlagers 15 der Taumelscheibe 5; 5a, 5b und/oder benachbarter Bauteile und/oder Aggregate erfasst und entsprechende Messsignale 14 der elektronischen Speicher- und Auswerteeinheit 13 zur gemeinsamen Verarbeitung mit den Signalen 12 aus den erfassten Querkräften, Biegemomenten und/oder Dehnungen bzw. Wegen der zumindest einen Schere 6, 8 zur Verfügung stellt.

Im Wesentlichen ist dabei dann vorgesehen, dass von der Lager - Überwachungsvorrichtung als Zustands- und/oder Betriebsbedingungen des Wälzlagers 15 der Taumelscheibe 5; 5a, 5b und/oder benachbarter Bauteile und/oder Aggregate Beschleunigungswerte und/oder Drehzahlwerte und/oder Temperaturwerte direkt am Wälzlager 15 sensorisch erfasst werden.

Zweckmäßigerweise werden die erfassten Messwerte eines gegebenenfalls vorgesehenen Temperatursensors mit Umgebungstemperatur-Messwerten und/oder Soll-Betriebstemperaturen des Wälzlagers 15 abgeglichen, um eine Verfälschung des Messergebnisses bzw. daraus abgeleiteter Aussagen zu vermeiden. Die Zweckmäßigkeit der Berücksichtigung der Umgebungstemperatur ist leicht einsehbar, da Luftfahrzeuge bekanntermaßen bei Umgebungstemperaturen von +60 °C bis -40 °C betrieben werden.

Zusammenfassend sind mehrere Sensorkombinationen möglich, um dem Bedürfnis nach zuverlässigen Messergebnissen für die Beurteilung des Zustandes des Wälzlagers 15 zwischen dem stationären Teil 5a und dem drehbaren Teil 5b einer Taumelscheibe 5 eines Drehflüglers gerecht zu werden. So sind beispielsweise folgende Sensor-Systeme zur Zustandüberwachung des Wälzlagers 15 einer Taumelscheibe 5; 5a, 5b eines Drehflüglers relevant:
- Nutzung von zumindest einem Sensor "Scheren-Sensor" zur Erfassung von Querkräften, Biegemomenten und/oder Dehnungen bzw. Wegen an einer Schere eines Rotors eines Drehflüglers,
- Nutzung von zumindest einem "Scheren-Sensor" kombiniert mit zumindest einem Drehzahlsensor,
- Nutzung von zumindest einem "Scheren-Sensor" kombiniert mit zumindest einem Beschleunigungssensor,
- Nutzung von zumindest einem "Scheren-Sensor" kombiniert mit zumindest einem Drehzahlsensor und zumindest einem Beschleunigungssensor,
- Nutzung von zumindest einem "Scheren-Sensor" kombiniert mit zumindest einem Beschleunigungssensor und zumindest einem Temperatursensor und
- Nutzung von zumindest einem "Scheren-Sensor" kombiniert mit zumindest einem Drehzahlsensor, einem Beschleunigungssensor und einem Temperatursensor.

Für den Fachmann ist in Kenntnis der Erfindung leicht nachvollziehbar, dass vorhandene Lagerüberwachungs-Vorrichtungen beziehungsweise Bearing Monitoring Unit's (BMU's) somit vorteilhaft im Sinne der oben aufgeführten System-Varianten durch einen "Scheren-Sensor" zur Erfassung der an der zumindest einen Schere 6, 8 angreifenden Querkräfte, Biegemomente und/oder Dehnungen bzw. Wege ergänzt oder ersetzt werden können.

### Bezugszeichen

- 1: Rotor
- 2: Rotorblätter
- 3: Rotorkopf
- 4: Rotormast
- 5: Taumelscheibe
- 5a: stationärer Teil der Taumelscheibe
- 5b: drehbarer Teil der Taumelscheibe 5
- 6: Schere (feststehend)
- 7: Luftfahrzeugzelle, Getriebegehäuse
- 8: Schere (mitdrehend)
- 9: Steuerstange
- 10: Steuerstange
- 11: Steuerhörner
- 12: Signale, Messwerte
- 13: Speicher- und Auswerteeinheit
- 14: Signale, Messwerte
- 15: Wälzlager, Wälzlagerung
- 16: Sensor

## Patentansprüche

1. Verfahren zur Zustandsüberwachung des Wälzlagers (15) einer Taumelscheibe (5) eines Drehflüglers, der zumindest einen Rotor (1) mit zwei oder mehr Rotorblättern (2) aufweist, die an einem Rotorkopf (3) angelenkt und um ihre Längsachse schwenkbar gelagert sind, wobei die Rotorblätter (2) über die einen Rotormast (4) umschließende Taumelscheibe (5) ansteuerbar sind, und bei dem die Taumelscheibe (5) gebildet ist aus einem stationären Teil (5a), das mittels zumindest einer ersten Schere (6) drehfest mit der Luftfahrzeugzelle (7) des Drehflüglers verbunden ist, und einem drehbaren Teil (5b), welches über das Wälzlager (15) gegenüber dem stationären Teil (5a) drehbar gelagert und drehfest mittels zumindest einer zweiten Schere (8) mit dem Rotorkopf (3) verbunden ist, **gekennzeichnet durch** folgende durchzuführende Verfahrensschritte:
a) Erfassung der an zumindest einer Schere (6, 8) angreifenden Querkräfte, Biegemomente und/oder Dehnungen bzw. Wege mittels zumindest eines Sensors (16) unmittelbar an der Schere (6, 8).
b) Generierung von auswertbaren Signalen (12) mittels des zumindest einen Sensors (16).
c) Übermittlung der generierten Signale (12) an eine elektronische Speicher-und Auswerteeinheit (13).
d) Auswertung der gespeicherten Messwerte unter Hinzuziehung von Referenzwerten.
e) Rückschließen auf den aktuellen Zustand des Wälzlagers (15) der Taumelscheibe (5; 5a, 5b).

2. Verfahren nach Anspruch 1, **dadurch gekennzeichnet, dass** im Hinblick auf den Verfahrensschritt a) ein Sensor (16) in Form eines Dehnungsmessstreifens, ein auf Dehnungsmessstreifen aufbauender Sensor oder ein sonstiger an sich bekannter Sensor verwendet wird, der geeignet ist, Querkräfte, Biegemomente und/oder Dehnungen bzw. Wege zu erfassen.

3. Verfahren nach Anspruch 1 oder 2, dadurch **gekennzeichn e t** , dass im Hinblick auf den Verfahrensschritt a) die angreifenden Querkräfte, Biegemomente und/oder Dehnungen bzw. Wege über mehrere Stützstellen während eines Umlaufs des Rotors (1) unter zusätzlicher Verwendung eines Winkelgebers winkelgetriggert (winkeläquidistant) oder unter zusätzlicher Verwendung eines Drehzahlsensors zeitgetriggert (zeitäquidistant) erfasst werden.

4. Verfahren nach Anspruch 3, **dadurch gekennzeichnet, dass** als Drehzahlsensor ein Rotor-Drehzahlsensor, wie ein in dem Wälzlager (15) der Taumelscheibe (5; 5a, 5b) integrierter oder ein in der Rotormast-Lagerung integrierter Drehzahlsensor, oder ein jeglicher anderer geeigneter Drehzahlsensor, wie ein am Hauptantrieb oder an einer Getriebewelle messender Drehzahlsensor, verwendet wird.

5. Verfahren nach Anspruch 1, **dadurch gekennzeichnet, dass** im Hinblick auf den Verfahrensschritt c) die generierten Signale (12) elektrisch oder berührungslos mittels Funk, Infrarot oder Ultraschall der elektronischen Speicher- und Auswerteeinheit (13) zugeführt werden.

6. Verfahren nach Anspruch 1, **dadurch gekennzeichnet, dass** mittels einer allgemein als Bearing Monitoring Unit - BMU - bezeichneten Lager-Überwachungsvorrichtung Zustands- und/oder Betriebsbedingungen des Wälzlagers (15) der Taumelscheibe (5; 5a, 5b) und/oder benachbarter Bauteile und/oder Aggregate erfasst und entsprechende Signale (14) der elektronischen Speicher- und Auswerteeinheit (13) zur gemeinsamen Verarbeitung mit den Signalen (12) aus den erfassten Querkräften, Biegemomenten und/oder Dehnungen bzw. Wegen der zumindest einen Schere (6, 8) zugeführt werden.

7. Verfahren nach Anspruch 6, **dadurch gekennzeichnet, dass** von der Lager-Überwachungsvorrichtung als Zustands- und/oder Betriebsbedingungen des Wälzlagers (15) der Taumelscheibe (5; 5a, 6b) und/oder benachbarter Bauteile und/oder Aggregate Beschleunigungswerte und/oder Drehzahlwerte und/oder Temperaturwerte sensorisch erfasst werden.

8. Verfahren nach Anspruch 7, **dadurch gekennzeichnet, dass** die erfassten Messwerte eines Temperatursensors mit Umgebungstemperatur-Messwerten abgeglichen werden.

9. Vorrichtung zur Zustandsüberwachung des Wälzlagers (15) einer Taumelscheibe (5) eines Drehflüglers, der zumindest einen Rotor (1) mit zwei oder mehr Rotorblättern (2) aufweist, die an einem Rotorkopf (3) angelenkt und um ihre Längsachse schwenkbar gelagert sind, wobei die Rotorblätter (2) über die einen Rotormast (4) umschließende Taumelscheibe (5) ansteuerbar sind und die Taumelscheibe (5) gebildet ist aus einem stationären Teil (5a), der mittels zumindest einer ersten Schere (6) drehfest mit der Luftfahrzeugzelle (7) des Drehflüglers verbunden ist, und einem drehbaren Teil (5b), der über das Wälzlager (15) gegenüber dem stationären Teil (5a) drehbar gelagert und drehfest mittels zumindest einer zweiten Schere (8) mit dem Rotorkopf (3) verbunden ist, **dadurch gekennzeichnet, dass** zumindest einer Schere (6, 8) zumindest ein Sensor (16) zur Erfassung der angreifenden Querkräfte, Biegemomente und/oder Dehnungen bzw. Wege zugeordnet ist, und dass dieser zumindest eine Sensor elektrisch oder berührungslos mittels Funk, Infrarot oder Ultraschall mit einer elektronischen Speicher- und Auswerteeinheit (13) verbunden ist.

10. Vorrichtung nach Anspruch 9, **dadurch gekennzeichnet, dass** der zumindest eine Sensor (16) durch einen Dehnungsmessstreifen, einen auf Dehnungsmessstreifen aufbauenden Sensor oder einen sonstigen Sensor gebildet ist, der geeignet ist, Querkräfte, Biegemomente und/oder Dehnungen bzw. Wege zu erfassen.

11. Vorrichtung nach Anspruch 9, **dadurch gekennzeichnet, dass** der elektronischen Speicher- und Auswerteeinheit (13) eine allgemein als Bearing Monitoring Unit - BMU - bezeichnete Lager-Überwachungsvorrichtung zugeordnet ist, die Zustands- und/oder Betriebsbedingungen des Wälzlagers (15) der Taumelscheibe (5, 5a, 5b) und/oder benachbarter Bauteile und/ oder Aggregate erfasst sowie entsprechende Signale (14) zur gemeinsamen Verarbeitung mit den Signalen (12) aus den erfassten Querkräften, Biegemomenten und/oder Dehnungen bzw. Wegen der zumindest einen Schere (6, 8) zur Verfügung stellt.

12. Vorrichtung nach Anspruch 11, **dadurch gekennzeichnet, dass** die Zustands- und/oder Betriebsbedingungen des Wälzlagers (15) der Taumelscheibe (5; 5a, 5b) und/oder benachbarter Bauteile und/oder Aggregate durch sensorisch erfasste Beschleunigungswerte und/oder Drehzahlwerte und/oder Temperaturwerte definiert sind.

## Claims

1. Method for monitoring the status of the roller bearings (15) of a swash plate (5) of a rotorcraft which has at least one rotor (1) with two or more rotor blades (2), which are attached to a rotor head (3) and mounted such that they can pivot about their longitudinal axis, wherein the rotor blades (2) can be driven via the swash plate (5) enclosing a rotor mast (4), and in which the swash plate (5) is formed from a stationary part (5a), which is non-rotatably connected by means of at least one first scissor mechanism (6) to the aircraft cell (7) of the rotorcraft, and a rotatable part (5b), which is mounted via the roller bearings (15) such that it can rotate with respect to the stationary part (5a) and is non-rotatably connected to the rotor head (3) by means of at least one second scissor mechanism (8), **characterized by** the following method steps to be carried out:
a) measuring the transverse forces, bending moments and/or expansions or displacements acting on at least one scissor mechanism (6, 8) by means of at least one sensor (16) directly on the scissor mechanism (6, 8),
b) generating evaluable signals (12) by means of the at least one sensor (16),
c) transmitting the generated signals (12) to an electronic storage and evaluation unit (13),
d) evaluating the stored measured values with the aid of reference values,
e) drawing conclusions about the current status of the roller bearing (15) of the swash plate (5; 5a, 5b).

2. Method according to Claim 1, **characterized in that**, with regard to method step a), use is made of a sensor (16) in the form of a strain gauge, a sensor based on strain gauges or another sensor known per se which is suitable to measure transverse forces, bending moments and/or expansions or displacements.

3. Method according to Claim 1 or 2, **characterized in that**, with regard to method step a), the transverse forces, bending moments and/or expansions or displacements acting are measured via a plurality of reference points during a revolution of the rotor (1) with the additional use of a rotary encoder with angle triggering (equidistant angles) or with the additional use of a rotational speed sensor with time triggering (equidistant times).

4. Method according to Claim 3, **characterized in that** the rotational speed sensor used is a rotor rotational speed sensor, such as a rotational speed sensor integrated into the roller bearing (15) of the swash plate (5; 5a, 5b) or a rotational speed sensor integrated into the rotor mast mounting, or any other suitable rotational speed sensor, such as a rotational speed sensor measuring on the main drive or on a gearbox shaft.

5. Method according to Claim 1, **characterized in that** with regard to method step c), the generated signals (12) are supplied to the electronic storage and evaluation unit (13) electrically or without contact by means of radio, infrared or ultrasound.

6. Method according to Claim 1, **characterized in that** by means of a bearing monitoring device, generally designated a bearing monitoring unit - BMU -, status and/or operating conditions of the roller bearing (15) of the swash plate (5; 5a, 5b and/or adjacent components and/or assemblies are measured and appropriate signals (14) are fed to the electronic storage and evaluation unit (13) for joint processing with the signals (12) from the measured transverse forces, bending moments and/or expansions or displacements of the at least one scissor mechanism (6, 8).

7. Method according to Claim 6, **characterized in that** acceleration values and/or rotational speed values and/or temperature values are measured by sensors by the bearing monitoring device as status and/or operating conditions of the roller bearing (15) of the swash plate (5; 5a, 5b) and/or adjacent components and/or assemblies.

8. Method according to Claim 7, **characterized in that** the measured values from a temperature sensor are compensated with ambient temperature measured values.

9. Device for monitoring the status of the roller bearing (15) of a swash plate (5) of a rotorcraft which has at least one rotor (1) with two or more rotor blades (2), which are attached to a rotor head (3) and mounted such that they can pivot about their longitudinal axis, wherein the rotor blades (2) can be driven via the swash plate (5) enclosing a rotor mast (4), and in which the swash plate (5) is formed from a stationary part (5a), which is non-rotatably connected by means of at least one first scissor mechanism (6) to the aircraft cell (7) of the rotorcraft, and a rotatable part (5b), which is mounted via the roller bearings (15) such that it can rotate with respect to the stationary part (5a) and is non-rotatably connected to the rotor head (3) by means of at least one second scissor mechanism (8), **characterized in that** at least one scissor mechanism (6, 8) is assigned at least one sensor (16) for measuring the transverse forces, bending moments and/or expansions or displacements that act, and **in that** this at least one sensor is connected to an electronic storage and evaluation unit (13) electrically or without contact by means of radio, infrared or ultrasound.

10. Device according to Claim 9, **characterized in that** the at least one sensor (16) is formed by a strain gauge, a sensor based on strain gauges or another sensor which is suitable to measure transverse forces, bending moments and/or expansions or displacements.

11. Device according to Claim 9, **characterized in that** the electronic storage and evaluation unit (13) is assigned a bearing monitoring device generally designated a bearing monitoring unit - BMU - which measures status and/or operating conditions of the roller bearings (15) of the swash plate (5, 5a, 5b) and/or adjacent components and/or assemblies, and provides appropriate signals (14) for joint processing with the signals (12) from the measured transverse forces, bending moments and/or expansions or displacements of the at least one scissor mechanism (6, 8).

12. Device according to Claim 11, **characterized in that** the status and/or operating conditions of the roller bearing (15) of the swash plate (5; 5a, 5b) and/or adjacent components and/or assemblies are defined by acceleration values and/or rotational speed values and/or temperature values measured by sensors.

## Revendications

1. Procédé de surveillance d'état du palier à roulement (15) d'un disque oscillant (5) d'une voilure tournante comportant au moins un rotor (1) doté de deux pales de rotor (2) ou plus articulées au niveau d'une tête de rotor (3) et disposées de façon à pouvoir pivoter autour de leur axe longitudinal, les pales de rotor (2) pouvant être commandées via le disque oscillant (5) entourant une tige de rotor (4) et dans lequel le disque oscillant (5) se compose d'une partie stationnaire (5a), reliée solidairement en rotation à la cellule d'aéronef (7) de la voilure tournante à l'aide d'au moins un premier tranchant (6), et d'une partie pivotable (5b), disposée de façon à pouvoir pivoter par rapport à la partie stationnaire (5a) via le palier à roulement (15) et reliée solidairement en rotation à la tête de rotor (3) à l'aide d'au moins un deuxième tranchant (8), **caractérisé par** les étapes de procédé suivantes à mettre en oeuvre :
a) détection directement au niveau du tranchant (6, 8) des forces transversales, moments de flexion et/ou dilatations ou bien trajectoires s'exerçant au niveau d'au moins un tranchant (6, 8) à l'aide d'au moins un capteur (16) ;
b) génération de signaux (12) analysables à l'aide de l'au moins un capteur (16) ;
c) transmission des signaux (12) générés à une unité de mémoire et d'analyse électronique (13) ;
d) analyse des valeurs de mesure mémorisées par consultation des valeurs de référence ;
e) retour à l'état actuel du palier à roulement (15) du disque oscillant (5 ; 5a, 5b).

2. Procédé selon la revendication 1, **caractérisé en ce que** pour l'étape de procédé a), on peut utiliser un capteur (16) prenant la forme d'une bande de mesure de dilatation, un capteur placé sur une bande de mesure de dilatation ou n'importe quel capteur connu en soi adapté à la détection de forces transversales, de moments de flexion et/ou de dilatations ou bien de trajectoires.

3. Procédé selon la revendication 1 ou 2, **caractérisé en ce que** pour l'étape de procédé a), les forces transversales, moments de flexion et/ou dilatations ou bien trajectoires se produisant sont détectés par le biais de plusieurs points d'appui pendant un tour du rotor (1) en utilisant en sus un capteur d'angle se déclenchant à un angle donné (à équidistance d'angle) ou en utilisant en sus un capteur de vitesse de rotation se déclenchant à un moment donné (à équidistance dans le temps).

4. Procédé selon la revendication 3, **caractérisé en ce que** le capteur de vitesse de rotation utilisé est un capteur de vitesse de rotation de rotor, tel qu'un capteur de vitesse de rotation intégré dans le palier à roulement (15) du disque oscillant (5 ; 5a, 5b) ou un capteur de vitesse de rotation intégré dans l'espace de rangement de tige de rotor ou un quelconque autre capteur de vitesse de rotation adapté, tel qu'un capteur de vitesse de rotation effectuant ses mesures au niveau de l'entraînement principal ou au niveau d'un arbre de transmission.

5. Procédé selon la revendication 1, **caractérisé en ce que** pour l'étape de procédé c), les signaux (12) générés sont envoyés à l'unité de mémoire et d'analyse (13) électronique par voie électrique ou sans contact par radio, infrarouge ou ultrason.

6. Procédé selon la revendication 1, **caractérisé en ce que** les conditions d'état et/ou de fonctionnement du palier à roulement (15) du disque oscillant (5 ; 5a, 5b) et/ou des composants et/ou groupes connexes sont détectés à l'aide d'un dispositif de surveillance de palier de roulement généralement appelé en anglais BMU (Bearing Monitoring Unit) et que les signaux (14) correspondants sont envoyés à l'unité de mémoire et d'analyse (13) électronique en vue de réaliser un traitement commun avec les signaux (12) relatifs aux forces transversales, moments de flexion et/ou dilatations ou bien trajectoires détectés pour l'au moins un tranchant (6, 8).

7. Procédé selon la revendication 6, **caractérisé en ce que** des valeurs d'accélération et/ou des valeurs de vitesse de rotation et/ou des valeurs de température sont détectées par voie de capteurs par le dispositif de surveillance de palier de roulement sous la forme de conditions d'état et/ou de fonctionnement du palier à roulement (15) du disque oscillant (5 ; 5a, 5b) et/ou des composants et/ou groupes connexes.

8. Procédé selon la revendication 7, **caractérisé en ce que** les valeurs de mesure détectées d'un capteur de température sont comparées aux valeurs de mesure de température ambiante.

9. Dispositif de surveillance d'état du palier à roulement (15) d'un disque oscillant (5) d'une voilure tournante comportant au moins un rotor (1) doté de deux pales de rotor (2) ou plus articulées au niveau d'une tête de rotor (3) et disposées de façon à pouvoir pivoter autour de leur axe longitudinal, les pales de rotor (2) pouvant être commandées via le disque oscillant (5) entourant une tige de rotor (4) et dans lequel le disque oscillant (5) se compose d'une partie stationnaire (5a), reliée solidairement en rotation à la cellule d'aéronef (7) de la voilure tournante à l'aide d'au moins un premier tranchant (6), et d'une partie pivotable (5b), disposée de façon à pouvoir pivoter par rapport à la partie stationnaire (5a) via le palier à roulement (15) et reliée solidairement en rotation à la tête de rotor (3) à l'aide d'au moins un deuxième tranchant (8), **caractérisé en ce qu'**au moins un capteur (16) est associé à au moins un tranchant (6, 8) pour détecter les forces transversales, moments de flexion et/ou dilatations ou bien trajectoires s'exerçant, que cet au moins un capteur est relié à une unité de mémoire et d'analyse (13) électronique sur le plan électrique ou sans contact par radio, infrarouge ou ultrason.

10. Dispositif selon la revendication 9, **caractérisé en ce que** l'au moins un capteur (16) prend la forme d'une bande de mesure de dilatation, d'un capteur placé sur une bande de mesure de dilatation ou de n'importe quel capteur connu en soi adapté à la détection de forces transversales, de moments de flexion et/ou de dilatations ou bien de trajectoires.

11. Dispositif selon la revendication 9, **caractérisé en ce qu'**un dispositif de surveillance de palier de roulement généralement appelé en anglais BMU (Bearing Monitoring Unit) est associé à une unité de mémoire et d'analyse (13) électronique, ledit dispositif détectant les conditions d'état et/ou de fonctionnement du palier à roulement (15) du disque oscillant (5, 5a, 5b) et/ou des composants et/ou groupes connexes et mettant à disposition les signaux (14) correspondants en vue de réaliser un traitement commun avec les signaux (12) relatifs aux forces transversales, moments de flexion et/ou dilatations ou bien trajectoires de l'au moins un tranchant (6, 8).

12. Dispositif selon la revendication 11, **caractérisé en ce que** les conditions d'état et/ou de fonctionnement du palier à roulement (15) du disque oscillant (5 ; 5a, 5b) et/ou des composants et/ou groupes connexes sont définies par des valeurs d'accélération et/ou des valeurs de vitesse de rotation et/ou des valeurs de température détectées par voie de capteurs.
